# EUROPÄISCHE PATENTSCHRIFT

(11) **EP 1 582 456 B1**
(45) Veröffentlichungstag und Bekanntmachung des Hinweises auf die Patenterteilung: **11.07.2007**
(21) Anmeldenummer: 05100461.2
(22) Anmeldetag: 25.01.2005
(51) Int. Cl.: B63H 21/32, B63G 8/34, B63G 13/02

(54) **Unterdruck-Mischeinrichtung für Schiffsabgase**
Under-pressure mixing device for ship exhaust gasses
Dispositif de mélange sous-pression de gaz d'échappement de vaisseau

(30) Priorität: 29.03.2004 DE 102004015794
(43) Veröffentlichungstag der Anmeldung: 05.10.2005
(73) Patentinhaber: SIEMENS AKTIENGESELLSCHAFT, 80333 München (DE)
(72) Erfinder: Abdel-Maksoud, Moustafa, 14165 Berlin (DE); Schulze Horn, Hannes, 45966 Gladbeck (DE); Tigges, Kay, 21698 Harsefeld (DE)

(56) Entgegenhaltungen:
- GB-A- 1 323 871
- US-A- 3 084 651
- US-A- 4 631 032
- US-A1- 2003 119 388

## Beschreibung

Auf großen, seegehenden Schiffen, seien es Marine-Schiffe, wie Fregatten, Korvetten etc., oder großen Yachten sowie Fähren, ist eine erhebliche Leistung in Form von Verbrennungskraftmaschinen installiert. Diese Verbrennungskraftmaschinen erzeugen eine erhebliche Abgasmenge, die in die Atmosphäre geblasen wird. Dies erfolgt in der Regel bei Schiffen der Handelsmarine, aber auch bei vielen Marine-Schiffen, nach oben und führt zu einer nicht unerheblich störenden Abgasfahne. Diese ist über dem Meer meilenweit sichtbar und noch über den Radarhorizont hinweg IR-detektierbar. (Ortung). Um die Sichtbarkeit und Ortbarkeit der Abgasfahne zu vermindern oder zu vermeiden, ist es bei einigen Marine-Schiffen üblich, die Abgase dicht oberhalb der Wasserlinie, etwa seitlich, oder dicht unterhalb der Wasserlinie, dann bevorzugt am Heck, auszuleiten. Auch die letztere Maßnahme führt jedoch nicht zu einer so guten Vermischung der Abgase mit dem Wasser, dass eine Ortung der aus den sich bildenden Gasblasen aufsteigenden Abgase nicht möglich wäre.

Es ist Aufgabe der Erfindung, eine Einrichtung anzugeben, die das Abgas von Schiffen mit nicht unerheblicher Größe unter Wasser vermischt ausleitbar, dabei eine Blasenbildung zuverlässig verhindert und auch bei größeren Volumenströmen und erheblichen Einleitungstiefen bis zu 5 Metern sowie bei Stillliegen des Schiffes funktionsfähig ist. Die Einleitung der Abgase soll also nicht nur auf hoher See, sondern auch im Hafen ohne eine Bildung einer Abgasfahne oder einer Abgasschicht auf der Wasseroberfläche möglich sein.

Außerdem soll die Einrichtung derartig arbeiten, dass sich auch bei dem Austrag der Abgase unter Wasser keine Leistungsminderung, sondern evtl. sogar eine Leistungssteigerung durch Verminderung des Abgasgegendrucks ergibt.

Darüber hinaus soll es möglich sein, die Abgase dazu zu benutzen, dass der Schiffswiderstand herabgesetzt wird.

Eingeleitet werden sollen sowohl das Abgas von Verbrennungskraftmaschinen, wie Dieselmotoren, aber auch von Gasturbinen sowie von Reformern und die Abluft der Klimaanlage, die ggf. vorhanden ist.

Aus der US 4.979.917 ist ein kleines Wasserfahrzeug bekannt, das einen Waterjet-Antrieb aufweist. Der vom Waterjet ausgestoßene Wasserstrahl wird dazu benutzt, um knapp unter der Wasserlinie im Heck des kleinen Wasserfahrzeugs einen Austrittskanal für das Abgas des Waterjet-Antriebsmotors freizumachen, damit das Abgas knapp unter dem Wasserspiegel austreten kann und dabei die Reibung im Heckbereich des kleinen Wasserfahrzeugs verringert. Dabei ist vorgesehen, auch das Kühlwasser des Motors dem Waterjet-Wasserstrahl beizumischen. Bei dieser bekannten Lösung wird zwar die Heckreibung des Wasserfahrzeugs vermindert, die Einleitung der Abgase geschieht aber nur in geringer Tiefe unter dem Wasserspiegel, so dass das Abgas im Wesentlichen unvermischt, zumindest in Form großer Blasen, an die Wasseroberfläche gelangt. Für große Wasserfahrzeuge und für eine deutliche Verminderung der Geruchsbelästigung auf Yachten sowie zur Vermeidung von Detektionen des Abgases von Marine-Schiffen ist diese bekannte Lösung daher nicht geeignet. Sie kann daher die gestellte Aufgabe nur sehr unvollkommen lösen.

Aus der US-PS 4,631,032 die alle Merkmale des Oberbegriffs des ersten Anspruchs 1 offenbart, ist weiterhin ein Waterjet für ein Boot bekannt, bei dem die Verbrennungsabgase des Waterjet-Antriebsmotors durch die hohle, rotierende Welle des Waterjet-Propellers einer Mischkammer für die Verbrennungsabgase und den Waterjet-Strom zugeführt werden, wobei die Mischkammer einen gegenüber dem Einströmquerschnitt verringerten Querschnitt aufweist. In der Waterjet-Kammer sind Drallschaufeln angeordnet, die den Waterjet-Propellerstrom richten. Die Zuführung des Treibwassers für die Waterjet-Einrichtung erfolgt durch eine Öffnung im Boden vor dem Waterjet-Propeller. Bedingt durch die konstruktiv beschränkte Größe der Waterjet-Propellerwelle können nur relativ geringe Abgasmengen im Waterjet-Strom verteilt werden.

Zur Lösung der Aufgabe ist eine Unterdruck-Mischeinrichtung für Schiffsabgas mit Wasser vorgesehen, die von Gas und Wasser längs angeströmt und längs durchströmt ausgebildet ist und ein mittig angeordnetes Gasführungsrohr für das Schiffsabgas sowie ein koaxial um das Gasführungsrohr angeordnetes, einen Unterdruck erzeugendes, Treibwasserrohr aufweist, wobei sich die Rohre in einem langgestreckten Gehäuse befinden. Die Ausgestaltung der Abgaseinleitungseinrichtung in das Wasser als Mischeinrichtung und nicht nur als Einrichtung, die auch nebenher mischt, ergibt zusammen mit der speziellen Unterdruckerzeugung und die gegenüber einem Ejektor vertauschte Lage und vertauschte Einleitung von Abgas und Wasser eine Einrichtung, die die Aufgabe vollständig erfüllen kann. Ein Beispiel für in der Schifffahrt als typisch bekannte, aber in der Praxis unzureichend mischende Ejektoren ist aus der JP-2001239995 A zu ersehen.

In Ausgestaltung der Erfindung ist vorgesehen, dass das Treibwasserrohr zur Unterdruckerzeugung einen Bereich mit einem gegenüber dem Einströmquerschnitt verringerten Querschnitt aufweist sowie dass der Bereich mit verringertem Querschnitt als Ringraum ausgebildet ist. Durch diese relativ aufwendige Ausführung ist es sowohl möglich, einen Unterdruck zu erzeugen, als auch diesen Unterdruck von außen auf den Abgasstrahl wirken zu lassen. Hierdurch ergibt sich eine gegenüber dem Stand der Technik erheblich verbesserte Misch- und Austragswirkung, die noch durch den Unterdruck, der in dem Wasserstrahl herrscht, verstärkt wird.

Es ist weiterhin vorgesehen, dass in dem querschnittsverringerten Bereich des Treibwasserrohres Drallerzeugungsmittel, z.B. Drallschaufeln, angeordnet sind. Hierdurch wird vorteilhaft die Mischwirkung durch den Treibwasserstrahl noch weiter erhöht.

In weiterer Ausgestaltung der Erfindung ist vorgesehen, dass in dem Gasführungsrohr mittig ein Gasverdrängungskörper angeordnet ist, vorzugsweise im Bereich des Treibwasserringraums, wobei um den Gasverdrängungskörper ebenfalls ein Ringraum für das Gas ausgebildet ist. So ergibt sich eine sehr vorteilhafte Vergrößerung der Oberfläche des Gasstrahls, die, insbesondere wenn auch der Gasstrahl in einen Drall versetzt wird, z.B. durch Drallschaufeln, zu einer bisher unerreicht guten Vermischung des Abgases mit dem Wasser führt.

Besonders günstig ist dabei, wenn die jeweiligen Drallerzeugungsmittel für Gas und Wasser gegenläufig wirkend angeordnet sind. Insgesamt wird so zuverlässig verhindert, dass sich Gasblasen bilden können, die Gas in nicht mit Wasser vermischter Form austragen. So wird die Bildung eines Abgasschleiers auf der Wasseroberfläche verhindert und eine weitestgehende Unterdrückung der Detektierbarkeit der Abgase erreicht. Die Abgase lösen sich in der Regel im Wasser, bevor die gebildeten kleinen und kleinsten Gasblasen die Oberfläche erreichen. Dabei wird nicht nur eine Russaustragung, sondern auch eine Geruchsbelästigung, wichtig z.B. für Yachten, mit Sicherheit vermieden.

Im Anschluss an die mit Drallerzeugungsmitteln bestückten Ringräume für Gas und Treibwasser ist ein ringförmiger Mischraum in dem rohrförmigen Außenbehälter der Einrichtung vorgesehen, an den sich ein Abgas-Wasser-Gemisch-Auslassrohr anschließt. Dieser Teil der Austragseinrichtung wirkt auch als Diffusor, so dass das austretende Wasser auch bei größeren Tiefen wieder auf die Druckverhältnisse des Wassers, in dem der Ausstoß erfolgt, gebracht wird. Der Diffusor ist dabei ein integriertes Bestandteil des Gemisch-Auslassrohrs. Dieser Teil des Gemisch-Auslassrohrs braucht keinen runden Querschnitt mehr zu haben, da hier keine Drallwirkung mehr vorhanden sein muss. Die Querschnitte in diesem Bereich können daher auch rechteckig sein, so dass sich eine Verteilung des Gas-Wasser-Gemisches, z.B. unter dem Schiffsboden oder an der Schiffsaußenwand, ergeben kann. So ist eine erhebliche Reibungsverringerung an der Schiffsaußenwand erreichbar.

In einer besonders einfachen und für eine Serienproduktion besonders geeigneten Ausführung ist vorgesehen, dass die Einrichtung ein zylindrisches Hüllrohr aufweist, dessen Durchmesser insbesondere dem Durchmesser des Treibwasserrohres entspricht. So können sehr vorteilhaft Standardeinrichtungen geschaffen werden, bei denen lediglich die Ein- und Ausströmöffnungen an die jeweiligen Verhältnisse des Schiffes, in denen sie eingesetzt werden, angepasst werden müssen.

Es ist in Ausgestaltung der Erfindung vorgesehen, dass vor dem Treibwasserrohr eine steuer- und regelbare, insbesondere elektrisch angetriebene, Treibwasserpumpe angeordnet ist. So ist stets die für die Austragung erforderliche Wassermenge erzeugbar, ohne dass zuviel Leistung aus dem Bordnetz, aus dem z.B. die Treibwasserpumpe ihre Energie bezieht, entnommen werden muss.

Von besonderem Vorteil ist es, wenn vor dem Abgasführungsrohr, d.h. also im Bereich des Eintritts des Abgases in die Einrichtung, eine Abgaskühlvorrichtung, insbesondere eine mit Wassereinspritzung arbeitende Abgaskühlvorrichtung, angeordnet ist. So wird das Abgasvolumen vorteilhaft erheblich verringert und die thermische Belastung der Einrichtung herabgesetzt.

Die erfindungsgemäße Einrichtung ist für kleine und große Verbrennungskraftmaschinen verwendbar. Von besonderem Vorteil ist es jedoch, wenn sie für die Einleitung der Abgase von in einem Schiff verteilt angeordneten Verbrennungskraftmaschinen in das Wasser verwendet wird, wobei die Verbrennungskraftmaschinen vorzugsweise, damit die Abgasleitungen kurz gehalten werden können, unterhalb der Wasserlinie angeordnet sind. So ergibt sich für das Schiff, in dem die Einrichtung verwendet wird, eine besonders günstige Möglichkeit der Unterbringung der Verbrennungskraftmaschinen in einem Bereich, der weniger "wertvollen" Innenraum enthält. Ein großer zentraler Maschinenraum kann bei einer derartigen Aufstellung entfallen und auch voluminöse Abgasleitungen in dem wertvollen Mittelschiffsbereich werden vermieden. Insgesamt ergibt sich für ein derartiges Schiff also nicht nur ein Gebrauchsgewinn, sondern auch ein Platzgewinn. Dies ist insbesondere für Navy-Schiffe mit ihren sehr begrenzten Platzverhältnissen von erheblichem Vorteil.

In einer speziellen Ausgestaltung der Erfindung ist vorgesehen, dass die Einrichtung für die Einleitung der Abgase von Gasturbinen zum Antrieb von Waterjets verwendet wird, wobei das Abgas-Wasser-Gemisch-Auslaufrohr in den Strahlaustrittsbereich der Waterjets einmündet. So ergibt sich bei tiefer Lage der Waterjets im Schiff eine Antriebsmöglichkeit mit Waterjets, bei der der Antriebsmaschinen- und Gesamtwirkungsgrad der unter Wasser arbeitenden Waterjets durch das erfindungsgemäß entstehende Unterdruckgebiet auf das Niveau von über Wasser arbeitenden Waterjets gebracht werden kann. Dies sehr vorteilhaft ohne die bisher üblichen großen maschinentechnischen und abgastechnischen Anlagen im Schiff.

Es ist auch möglich, das Abgas-Wasser-Gemisch-Auslassrohr in eine Schiffsrumpf-Bodenstufe einmünden zu lassen. Auch so ist die Abführung der großen Abgasmenge, z.B. von einer Gasturbine, ohne weiteres möglich, ohne dass die Regelbarkeit der Gasturbine eingeschränkt werden muss. Gasturbinen sind ja sehr gegendruckempfindlich!

Zur Erhöhung der Regelbarkeit der Waterjets ist in diesem Zusammenhang vorgesehen, dass der Waterjet-Austritt eine, vorzugsweise teleskopartige, Austrittsquerschnittsregelvorrichtung aufweist. So ist eine optimierte Treibstrahlgeschwindigkeit des Waterjets erhaltbar, die mit der Gas-Wasser-Gemisch-Menge harmoniert.

Die Verwendung der erfindungsgemäßen Einrichtung ist insbesondere vorteilhaft, wenn eine weitestgehende Emissionsfreiheit eines Navy-Schiffs oder einer großen Yacht erreicht werden soll. In diesem Fall werden auch die Abgase von Reformern zum Herstellen von Wasserstoff für Brennstoffzellen und auch die Luft von Klimaanlagen mit in eine entsprechende Einrichtung eingeleitet oder es wird eine gesonderte Einrichtung verwendet. In jedem Fall ergibt sich, dass ein mit einer erfindungsgemäßen Einrichtung ausgerüstetes Schiff weder eine Abgasfahne noch eine Heissluftfahne hinter sich herzieht.

Die Aufgabenlösung ist dabei sowohl für Marine-Schiffe als auch für große Yachten und für schnelle Fähren mit ihrem großen Platzbedarf unter Deck so vorteilhaft, dass die höheren Kosten und der etwas höhere Energiebedarf gegenüber einem freien Ausstoß der Abgase in die Luft in Kauf genommen werden kann.

Insbesondere für den Betrieb der erfindungsgemäßen Einrichtung zur Einleitung von Gasturbinenabgasen in das Wasser ist es vorteilhaft, wenn hier nicht voluminöse Unterdruck-Mischeinrichtungen verwendet werden, sondern wenn mehrere kleine Einrichtungen in Parallellage, z.B. neben dem Waterjet, angeordnet sind. So ergeben sich mehrere Unterdruck-Mischstränge, die auch eine Optimierung durch Zuschaltung der jeweils benötigten Unterdruck- und Mischvolumina ermöglichen.

Es ist vorgesehen, dass das Treibwasser einer Entnahmevorrichtung für Seewasser, z.B. einem Seekasten, entnommen wird. Es versteht sich, dass diesem Treibwasser auch Kühlwasser der Verbrennungskraftmaschinen zugemischt wird, so dass die Treibwassermenge nicht vollständig aus dem Umgebungswasser des Schiffes entnommen werden muss und Energie gespart wird.

Die Treibwasserpumpe wird vorteilhaft in die Schiffsautomatisierung mit eingebunden, so dass ihre Förderleistung an das Abgasvolumen automatisch anpassbar ist. Da die erfindungsgemäße Einrichtung insbesondere für Verbrennungskraftmaschinen verwendet werden soll, die unterhalb der Wasserlinie des Schiffes angeordnet sind, wird zur sicheren Vermeidung einer Überflutung dieser Verbrennungskraftmaschinen die Abgasleitung mit Rückschlagventilen oder Klappen versehen, die insbesondere automatisch arbeitend ausgebildet sind. So ergibt sich eine Sicherheit, die so hoch ist, dass sie von den Klassifikationsgesellschaften akzeptiert werden kann. Bei optimierter Treibwassermenge ist eine Einleitungstiefe von Abgas bis zu 5 bis 6 Metern möglich, so dass die Einrichtung einen Gasauslass unter der Tiefe von normalen Wellen ermöglicht. Falls größere Wellen von dem Schiff durchfahren werden müssen, sind diese so lang, dass eine entsprechende Regelung möglich ist, wenn die Treibwasserpumpe hinreichend dynamisch ausgelegt ist. Ein mit den erfindungsgemäßen Einrichtungen versehenes großes Schiff kann daher ohne Einschränkung durch Wetterbedingungen eingesetzt werden.

Die Erfindung wird anhand von Zeichnungen näher erläutert, aus denen weitere, auch erfindungswesentliche, Einzelheiten ebenso wie aus den Unteransprüchen entnehmbar sind.

Im Einzelnen zeigen:
- FIGUR 1: eine schematische Schnittzeichnung durch die erfindungsgemäße Einrichtung;
- FIGUR 2: eine beispielhafte Anordnung von Waterjets mit einem Gasauslass am Waterjetstrahl;
- FIGUR 3: einen schematischen Schnitt durch einen Waterjet mit einer parallel geführten erfindungsgemäßen Einrichtung und
- FIGUR 4: in beispielhafter schematischer Darstellung ein großes, seegehendes Schiff, z.B. eine Fregatte, mit verteilten erfindungsgemäßen Einrichtungen.

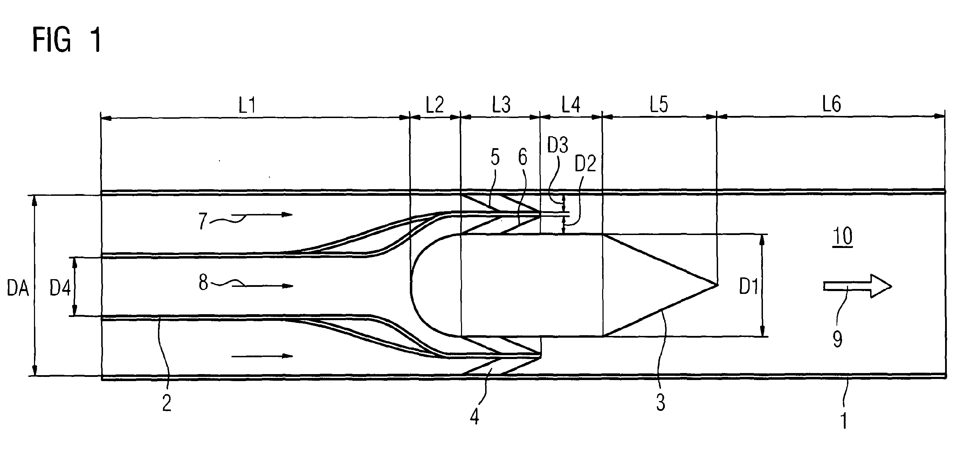

In FIGUR 1 bezeichnet 1 das Gehäuserohr der Einrichtung, das gleichzeitig das Einleitungsrohr für das Misch- und Unterdruckerzeugungswasser ist. 2 bezeichnet das Gasrohr sowie 3 den erfindungswesentlichen, vorteilhaften mittigen Verdrängungskörper für Gas mit einem Abströmkegel für das gebildete Gemisch mit Diffusorwirkung. Um den Verdrängungskörper 3 bildet sich das erfindungsgemäße Unterdruckgebiet auf der Außenseite der Aufweitung 4. Zur Dralleinleitung in den Wasser- und in den Gasstrom sind Leitelemente 5 und 6 vorgesehen, die gleichzeitig eine Halterung für den Verdrängungskörper 3 und den aufgeweiteten Wasserkanal 4 bilden können. Das der Misch- und Unterdruckerzeugungseinrichtung zugeführte Wasser ist durch die Pfeile 7 symbolisiert und das Gas durch den Pfeil 8. Das gebildete Gas-Wasser-Gemisch ist durch den Doppelpfeil 9 symbolisiert. 10 bezeichnet das Gemischausströmrohr.

Ganz wesentlich für die vorteilhafte Funktion der Misch- und Unterdruckerzeugungseinrichtung sind die geometrischen Verhältnisse, d.h. die Rohrdurchmesser und Rohrabschnittslängen in der Einrichtung. Aus diesem Grund sind die Einzellängen und die Hauptdurchmesser in FIGUR 1 eingetragen. Die Abmessungen in FIGUR 1 haben die Verhältnisse:
DA = 1, 5 - 2,0 D4
L1 = 3 - 4,5 D4
L2 = 0, 6 - 0,8 D4
L3 = 0, 8 - 1,2 D4
L4 = 0, 6 - 1,0 D4
L5 = 1, 3 - 1,7 D4
L6 = 1, 5 - 3,5 D4
D1 = 1,2 - 1,5 D4
D2 = 0, 2 - 0,3 D4
D3 = 0, 2 - 0,3 D4
D4 ist der Durchmesser des Abgasrohrs

Die in der Tabelle auf geführten Verhältnisse sind für ein Abgasrohr von 250 mm Durchmesser berechnet, in das die Abgase eines typischen, aufgeladenen Dieselmotors mit einer Leistung von 1300 KW eingeleitet werden. Die Abgaseinlasstemperatur in die Einrichtung ist nach ihrer erfindungsgemäß vorgesehenen Kühlung 90 Grad C.

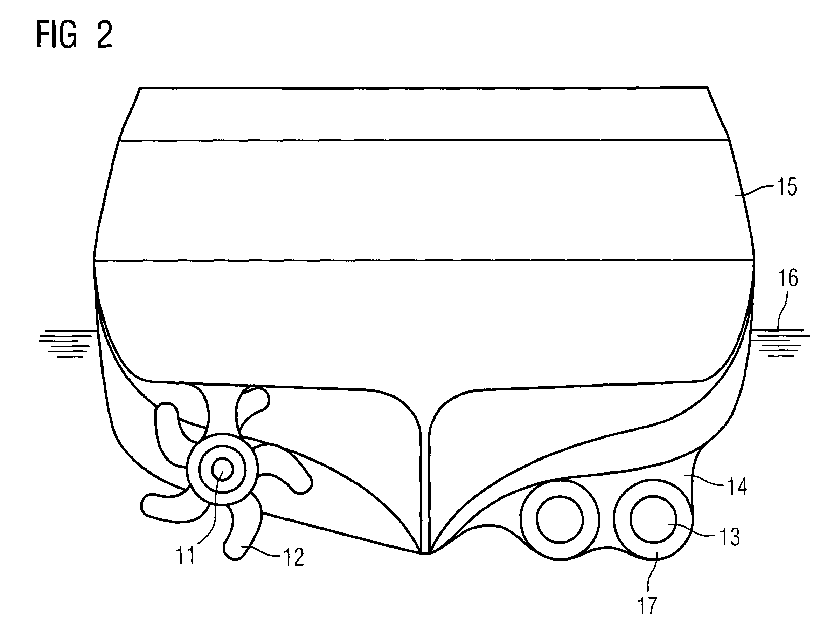

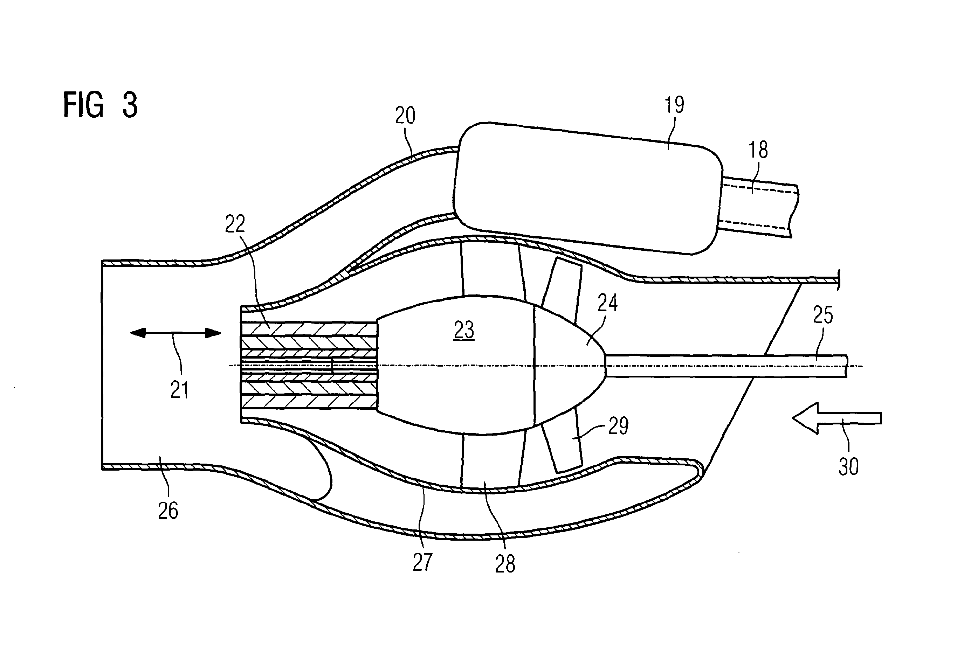

In FIGUR 2 bezeichnet 11 die Welle eines elektrischen Ruderpropellers mit dem Propellerblatt 12. Anstelle eines elektrischen Ruderpropellers kann auch ein normaler Festpropeller verwendet werden. Dann weist das Schiff anstelle des Ruderpropellerschafts ein Skeg für die Aufnahme eines entsprechenden Elektromotors oder einer Propellerwelle auf. In FIGUR 2 bezeichnet weiter 13 einen Waterjet, 14 das Waterjetgehäuse. Rund um den Waterjet 13 ist ein Ausströmraum 17 für die Abgase vorgesehen und Einzelheiten dieser Anordnung sind aus FIGUR 3 ersichtlich. Wie der eingezeichnete Wasserspiegel 16 zeigt, befindet sich der Waterjet 13 mit seinem Gehäuse 14 tief unter dem Rumpf des Schiffes 15. Üblicherweise wird der Motor des Waterjets direkt vor dem Waterjet angeordnet und die Verbrennungskraftmaschine, die die Energie für den Waterjet liefert, ist so dicht wie möglich im Bereich des Antriebsmotors des Waterjets angeordnet. So ergibt sich eine Anordnung, für die ein Ausstoß der Abgase im Bereich des Waterjetgehäuses 14 besonders günstig ist.

In FIGUR 3 bezeichnet 18 das koaxiale Einleitungsrohr für Gas und Wasser und 19 die erfindungsgemäße Einrichtung zur Unterdruckerzeugung und Mischung von Gas und Wasser. 20 bezeichnet das Rohr, mit dem das Gemisch ausgetragen wird und 26 den Ringraum am Austritt des Waterjets, aus dem sowohl das Gas-Wasser-Gemisch als auch der Waterjetstrahl austritt. Der Ringraum 26 kann bei dieser Anordnung vorteilhaft die Diffusorwirkung übernehmen, der Diffusorteil der Einrichtung also entfallen. Der Waterjet selbst weist einen Rotorteil 24, angetrieben durch die Welle 25, einen Statorteil 23 und eine regelbare Austrittsdüse mit teleskopartig ausschiebbarem Innenteil 22 auf. Die Ausschiebbarkeit des Teleskopteils ist durch den Doppelpfeil 21 symbolisiert. In dem Rotorteil des Waterjets befinden sich Schaufeln 29 und an dem Statorteil 23 befinden sich Schaufeln 28. Diese Schaufeln erzeugen in dem mittleren Gehäuseteil 27 den Austrittstrahl, dessen Querschnitt durch die Teleskopeinrichtung 22 regelbar ist. Das einströmende Wasser ist durch den Pfeil 30 symbolisiert. Zur Verdeutlichung sind einzelne Teile in der Zeichnung größer dargestellt, so z.B. die Teleskoprohre 22 und andere Teile, wie die erfindungsgemäße Einrichtung 19 verkleinert. Die Zeichnung dient nur dem grundsätzlichen Verständnis für die Anordnung einer erfindungsgemäßen Einrichtung und einem Waterjet.

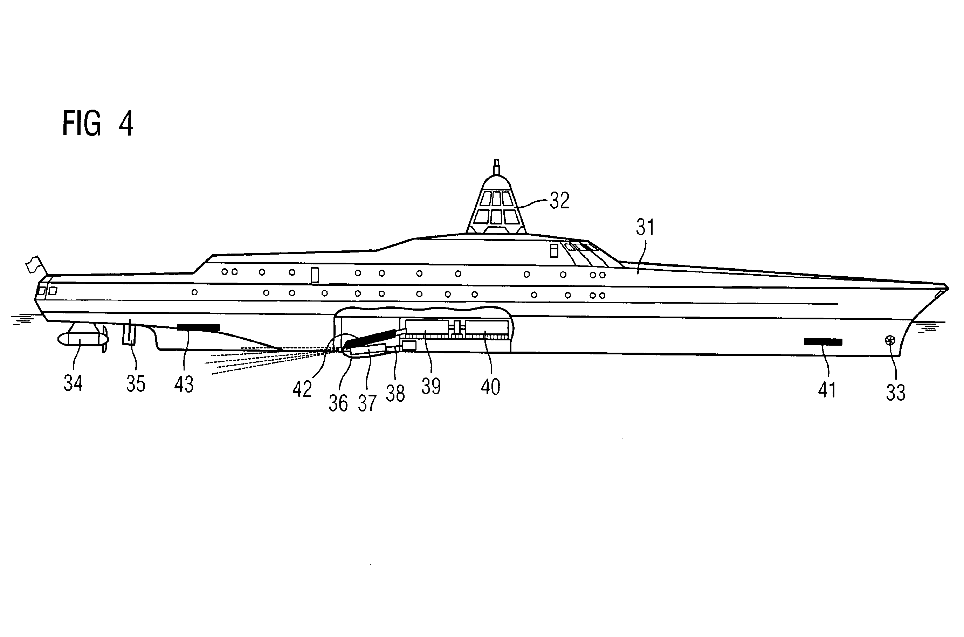

In FIGUR 4 bezeichnet 31 ein schnelles, seegehendes Schiff, z.B. eine Fregatte. Im Oberteil der Fregatte ist ein Multifunktionsturm 32 angedeutet. In dem als beispielhaft herangezogenen Schiffsrumpf befinden sich unterschiedliche erfindungsgemäße Einrichtungen 41, 42, 43 zur Ausleitung von Gas-Wasser-Gemischen. Sie sind im Schiff verteilt und vorteilhaft jeweils einer Energieerzeugungseinrichtung zugeteilt. Dies kann jeweils ein Dieselmotor oder eine Gasturbine, als Beispiel ist der Dieselgeneratorsatz 39, 40 gezeigt, oder aber ein Reformer sein. In dem Reformer wird Wasserstoff für Brennstoffzellen erzeugt. Durch die Verteilung ergibt sich sehr vorteilhaft, dass ein Treffer durch eine Mine oder Rakete jeweils nur einen Teil der Schiffsenergieerzeugung ausschalten kann.

Die beispielhaft gezeigte Fregatte wird durch einen drehbaren elektrischen Ruderpropeller 34 angetrieben, der den Waterjet 37 in seinem Gehäuse 36 ergänzt. Der Waterjet 37 wird dabei durch die Antriebswelle 38 angetrieben.

Die Abgase z.B. eines Gasturbinengeneratorsatzes, der anstatt des erwähnten Dieselgeneratorsatzes verwendet werden kann, werden der Einrichtung 42 zugeführt, wie bereits ausgeführt. Hier handelt es sich vorteilhaft um parallel geschaltete Einzeleinrichtungen, um die großen Gasmengen in die ebenfalls parallel geschalteten Waterjetmodule einzuleiten. Des Weiteren weist die beispielhaft gezeigte Fregatte noch ein ausfahrbares Ruder 35 und ein Bugstrahlruder 33 auf. Dabei handelt es sich um die Manövriereinrichtungen eines Schiffes von derartiger Größe, die üblicherweise verwendet werden, um eine stabile Geradeausfahrt zu erreichen oder um Anlegemanöver oder Ablegemanöver aus eigener Kraft zu ermöglichen.

## Patentansprüche

1. Unterdruck-Mischeinrichtung für Schiffsabgas mit Wasser, wobei das in der Einrichtung entstandene Gas-Wasser-Gemisch in das Wasser, in dem das Schiff schwimmt, ausgeleitet wird, wobei die Einrichtung von Gas und Wasser längs angeströmt und durchströmt ausgebildet ist und ein mittig angeordnetes Gasführungsrohr (2) für das Schiffsabgas sowie ein koaxial um das Gasführungsrohr angeordnetes, einen Unterdruck erzeugendes, Treibwasserrohr (1) aufweist, wobei sich die Rohre in einem lang gestreckten Gehäuse befinden und wobei das Treibwasserrohr (1) zur Unterdruckerzeugung einen Bereich (4) mit einem gegenüber dem Einströmquerschnitt verringerten Querschnitt aufweist, wobei der Bereich (4) mit verringertem Querschnitt des Treibwasserrohres (1) als Ringraum ausgebildet ist und wobei in dem querschnittsverringerten Bereich (4) des Treibwasserrohres (1) Drallerzeugungsmittel (5), z.B. Drallschaufeln, angeordnet sind,
**dadurch gekennzeichnet, dass** in dem Gasführungsrohr (2) mittig ein Gasverdrängungskörper (3) angeordnet ist, vorzugsweise im Bereich des Treibwasserringraums, um den herum ein Ringraum für das Gas ausgebildet ist.

2. Einrichtung nach Anspruch 1,
**dadurch gekennzeichnet, dass** in dem Ringraum für das Gas Drallerzeugungsmittel (6), z.B. Drallschaufeln, angeordnet sind.

3. Einrichtung nach Anspruch 2,
**dadurch gekennzeichnet, dass** die jeweiligen Drallerzeugungsmittel(5, 6), vorzugsweise Drallschaufeln, gegenläufig wirkend angeordnet sind.

4. Einrichtung nach Anspruch 1, 2 oder 3, **dadurch gekennzeichnet, dass** im Anschluss an die mit den Drallerzeugungsmitteln (5, 6) bestückten Ringräume für Gas und Treibwasser ein ringförmiger Mischraum für Gas und Treibwasser angeordnet ist, an den sich ein Abgas-Wasser-Gemisch-Auslaufrohr (10) anschließt.

5. Einrichtung nach einem oder mehreren der vorhergehenden Ansprüche, **dadurch gekennzeichnet, dass** im Anschluss an den Mischraum ein Diffusor angeordnet ist, vorzugsweise ein Diffusor, der ein Abgas-Wasser-Gemisch-Auslaufrohr (10, 20) bildet.

6. Einrichtung nach einem oder mehreren der vorhergehenden Ansprüche, **dadurch gekennzeichnet, dass** sie ein zylindrisches Hüllrohr aufweist, dessen Durchmesser insbesondere dem Durchmesser des Treibwasserrohres (1) entspricht.

7. Einrichtung nach einem oder mehreren der vorhergehenden Ansprüche, **dadurch gekennzeichnet, dass** vor dem Treibwasserrohr (1) eine steuer- und regelbare, insbesondere elektrisch angetriebene, Treibwasserpumpe angeordnet ist.

8. Einrichtung nach einem oder mehreren der vorhergehenden Ansprüche, **dadurch gekennzeichnet, dass** vor dem Abgasführungsrohr (2) eine Abgaskühlvorrichtung, insbesondere eine mit Wassereinspritzung arbeitende Abgaskühlvorrichtung, angeordnet ist.

9. Einrichtung nach einem oder mehreren der vorhergehenden Ansprüche, **dadurch gekennzeichnet, dass** sie für die Einleitung der Abgase von in einem Schiff (31) verteilt angeordneten Verbrennungskraftmaschinen oder Reformern in das Wasser verwendet wird, wobei die Verbrennungskraftmaschinen oder Reformer vorzugsweise unterhalb der Wasserlinie angeordnet sind.

10. Einrichtung nach einem oder mehreren der vorhergehenden Ansprüche, **dadurch gekennzeichnet, dass** sie für die Einleitung der Abgase von Gasturbinen zum Antrieb von tief unter der Wasserlinie angeordneten Waterjets verwendet wird.

11. Einrichtung nach Anspruch 10,
**dadurch gekennzeichnet, dass** das Abgas-Wasser-Gemisch-Auslaufrohr (10, 20) in den Strahlaustrittsbereich der tief angeordneten Waterjets einmündet.

12. Einrichtung nach einem oder mehreren der vorhergehenden Ansprüche, **dadurch gekennzeichnet, dass** das Abgas-Wasser-Gemisch-Auslaufrohr (10, 20) in eine Schiffsrumpf-Bodenstufe mündet.

13. Einrichtung nach Anspruch 10, 11 oder 12,
**dadurch gekennzeichnet, dass** der Waterjetaustritt eine, vorzugsweise teleskopartige, Austrittsquerschnittsregelvorrichtung (22) aufweist.

14. Einrichtung nach einem oder mehreren der Ansprüche 10 bis 13, **dadurch gekennzeichnet, dass** sie etwa in Parallellage zu den tief angeordneten Waterjets (37) angeordnet ist.

15. Einrichtung nach einem der Ansprüche 10 bis 14,
**dadurch gekennzeichnet, dass** sie mehrere Unterdruck-Mischstränge aufweist.

16. Einrichtung nach einem oder mehreren der vorhergehenden Ansprüche, **dadurch gekennzeichnet, dass** sie bei Marine-Schiffen zur Unterdrückung der IR-Signatur verwendet wird.

17. Einrichtung nach einem oder mehreren der Ansprüche 1 bis 15, **dadurch gekennzeichnet, dass** sie bei Yachten zur Abgaseinleitung in das Wasser verwendet wird.

18. Einrichtung nach einem oder mehreren der Ansprüche 1 bis 15, **dadurch gekennzeichnet, dass** sie bei schnellen, insbesondere zur Beförderung von Kraftfahrzeugen bestimmten, Fähren zur Abgaseinleitung in das Wasser verwendet wird.

19. Seegehendes Schiff mit, insbesondere im Schiff verteilten, Verbrennungskraftmaschinen,
**dadurch gekennzeichnet, dass** es zumindest eine Einrichtung (41, 42, 43) nach einem oder mehreren der vorhergehenden Ansprüche aufweist, die eine Abgas-Ausleitung unter der Wasserlinie, insbesondere in einer Tiefe von mehreren Metern unter der Wasserlinie, ermöglicht.

20. Seegehendes Schiff nach Anspruch 19,
**dadurch gekennzeichnet, dass** es zumindest eine Seewasser-Entnahmevorrichtung, z.B. einen Seekasten, zur Entnahme von Treibwasser aus dem Umgebungswasser des Schiffes aufweist.

21. Seegehendes Schiff nach Anspruch 19 oder 20,
**dadurch gekennzeichnet, dass** es eine Zuleitungseinrichtung von Kühlwasser zum Treibwasser aufweist.

22. Seegehendes Schiff nach Anspruch 19, 20 oder 21,
**dadurch gekennzeichnet, dass** es eine regelbare Treibwasserpumpe mit elektrischem Antrieb aufweist, die in die Schiffsautomatisierung eingebunden ist.

23. Seegehendes Schiff nach einem oder mehreren der Ansprüche 19 bis 22, **dadurch gekennzeichnet, dass** es Rückschlagventile oder Rückschlagklappen in der Gasleitung aufweist, die Stellungsgeber besitzen und vorzugsweise mit der Schiffsautomatisierung verbunden sind.

## Claims

1. Reduced pressure mixing device for marine vessel exhaust gas with water, with the gas/water mixture that is produced in the device being passed out into the water in which the ship is floating, with the device being designed such that gas and water flow through and to it longitudinally, and having a centrally-arranged gas guide tube (2) for the marine vessel exhaust gas as well as a propulsion water tube (1) which is arranged coaxially around the gas guide tube and produces reduced pressure, with the tubes being located in an elongated housing, with the propulsion water tube (1) having an area (4) with a cross section which is smaller than the incident flow cross section, in order to produce a reduced pressure, with the area (4) of the propulsion water tube (1) with the smaller cross section being in the form of an annular space, and with swirl-producing means (5), for example swirl blades, being arranged in the area (4) of the propulsion water tube (1) with the smaller cross section, **characterized**
**in that** a gas displacement body (3) is arranged centrally in the gas guide tube (2), preferably in the area of the propulsion water annular space, around which an annular space for the gas is formed.

2. Device according to Claim 1,
**characterized**
**in that** swirl-producing means (6), for example swirl blades, are arranged in the annular space for the gas.

3. Device according to Claim 2,
**characterized**
**in that** the respective swirl-producing means (5, 6), preferably swirl blades, are arranged such that they act in opposite directions.

4. Device according to Claim 1, 2 or 3,
**characterized**
**in that** the annular spaces for the gas and propulsion water which are fitted with the swirl-producing means (5, 6) are followed by an annular mixing area for the gas and propulsion water, which is followed by an exhaust gas/water mixture outlet tube (10).

5. Device according to one or more of the preceding claims,
**characterized**
**in that** the mixing area is followed by a diffusor, preferably a diffusor which forms an exhaust gas/water mixture outlet tube (10, 20).

6. Device according to one or more of the preceding claims,
**characterized**
**in that** the device has a cylindrical casing tube whose diameter corresponds in particular to the diameter of the propulsion water tube (1).

7. Device according to one or more of the preceding claims,
**characterized**
**in that** a controllable, in particular electrically driven, propulsion water pump is arranged in front of the propulsion water tube (1).

8. Device according to one or more of the preceding claims,
**characterized**
**in that** an exhaust gas cooling apparatus, in particular an exhaust gas cooling apparatus which operates with water injection, is arranged in front of the exhaust gas guide tube (2).

9. Device according to one or more of the preceding claims,
**characterized**
**in that** the device is used for the introduction of the exhaust gases from internal combustion engines or reformers (which are arranged distributed in a marine vessel (31)) into the water, with the internal combustion engines or reformers preferably being arranged underneath the waterline.

10. Device according to one or more of the preceding claims,
**characterized**
**in that** the device is used for the introduction of the exhaust gases from gas turbines for driving waterjets which are arranged deep below the waterline.

11. Device according to Claim 10,
**characterized**
**in that** the exhaust gas/water mixture outlet tube (10, 20) opens into the flow outlet area of the deeply arranged waterjets.

12. Device according to one or more of the preceding claims,
**characterized**
**in that** the exhaust gas/water mixture outlet tube (10, 20) opens into a marine vessel hull bottom step.

13. Device according to Claim 10, 11 or 12,
**characterized**
**in that** the waterjet outlet has a preferably telescopic outlet cross-section control apparatus (22).

14. Device according to one or more of Claims 10 to 13,
**characterized**
**in that** the device is arranged in a position approximately parallel to the deeply arranged waterjets (37).

15. Device according to one of Claims 10 to 14,
**characterized**
**in that** the device has two or more reduced pressure mixing paths.

16. Device according to one or more of the preceding claims,
**characterized**
**in that** the device is used to suppress the IR signature of navy ships.

17. Device according to one or more of claims 1 to 15,
**characterized**
**in that** the device is used for the introduction of exhaust gas into the water in the case of yachts.

18. Device according to one or more of claims 1 to 15,
**characterized**
**in that** the device is used for the introduction of exhaust gas into the water in the case of high-speed ferries which are intended in particular for the conveyance of motor vehicles.

19. Sea-going marine vessel having internal combustion engines which, in particular, are distributed in the marine vessel,
**characterized**
**in that** the marine vessel has at least one device (41, 42, 43) according to one or more of the preceding claims, which allows exhaust gas to be passed out under the waterline, in particular at a depth of several meters below the waterline.

20. Sea-going marine vessel according to Claim 19,
**characterized**
**in that** the marine vessel has at least one seawater extraction apparatus, for example a sea box for extraction of propulsion water from the water surrounding the marine vessel.

21. Sea-going marine vessel according to Claim 19 or 20,
**characterized**
**in that** the marine vessel has a device for supplying cooling water to the propulsion water.

22. Sea-going marine vessel according to Claim 19, 20 or 21,
**characterized**
**in that** the marine vessel has a controllable propulsion water pump with an electrical drive, which is connected to the marine vessel automation.

23. Sea-going marine vessel according to one or more of Claims 19 to 22,
**characterized**
**in that** the marine vessel has non-return valves or non-return flaps in the gas line which have position transmitters and are preferably connected to the marine vessel automation.

## Revendications

1. Dispositif de mélange en dépression à de l'eau de gaz d'échappement de navire, le mélange eau gaz issu du dispositif étant évacué dans l'eau dans laquelle flotte le navire, le dispositif étant conçu pour être alimenté et être traversé sur toute sa longueur par des gaz et de l'eau et ayant au milieu un tube conduisant les gaz (2) d'échappement à évacuer du navire ainsi qu'un autre conduit d'eau de propulsion (1) coaxial avec le tube de conduite des gaz et générant une dépression, ces deux conduits étant logés dans un caisson s'étendant en longueur, le conduit d'eau de propulsion (1) assurant la dépression ayant un tronçon (4) de section réduite par rapport à sa section d'entrée, la zone (4) de section réduite du conduit d'eau de propulsion (1) ayant la forme d'une chambre annulaire et la zone (4) de section réduite du conduit d'eau de propulsion (1) étant pourvue de moyens (5), par exemple des aubes, destinés à provoquer une mise en tourbillonnement du fluide, **caractérisé en ce que** le tube des gaz (2) a en son milieu un corps (3) de refoulement des gaz, disposé de préférence dans la zone de l'écoulement annulaire de l'eau, autour duquel est formé une chambre annulaire pour le gaz.

2. Dispositif selon la revendication 1, **caractérisé en ce que** la chambre annulaire pour les gaz est pourvue de moyens (6), par exemple d'aubes, destinés à provoquer une mise en tourbillonnement du fluide.

3. Dispositif selon revendication 2, **caractérisé en ce que** les moyens (5, 6), par exemple les aubes, de mise en tourbillonnement des fluides sont disposés de manière à agir en sens contraire.

4. Dispositif selon la revendication 1, 2 ou 3, **caractérisé en ce qu'**aux chambres annulaires pourvues des moyens (5, 6) de mise en tourbillonnement des gaz et de l'eau de propulsion fait suite une chambre de mélange annulaire pour l'eau de propulsion et le gaz, elle-même suivie d'un conduit d'évacuation du mélange eau gaz d'échappement (10).

5. Dispositif selon l'une ou plusieurs des revendications précédentes, **caractérisé en ce qu'**à la chambre de mélange fait suite un diffuseur, de préférence un diffuseur constituant le conduit d'évacuation du mélange eau gaz d'échappement (10, 20).

6. Dispositif selon l'une ou plusieurs des revendications précédentes, **caractérisé en ce qu'**il a un tube enveloppe cylindrique dont le diamètre correspond en particulier au diamètre du conduit de l'eau de propulsion (1).

7. Dispositif selon l'une ou plusieurs des revendications précédentes, **caractérisé en ce qu'**en amont du conduit d'eau de propulsion (1) est disposé une pompe d'eau de propulsion entraînée en particulier par un moteur électrique et dont le débit est pilotable et réglable.

8. Dispositif selon l'une ou plusieurs des revendications précédentes, **caractérisé en ce qu'**en amont du tube conduisant les gaz d'échappement (2) est disposé un système de refroidissement des gaz d'échappement, notamment conçu sous la forme d'un dispositif de refroidissement de gaz d'échappement fonctionnant par injection d'eau.

9. Dispositif selon l'une ou plusieurs des revendications précédentes, **caractérisé en ce qu'**il est utilisé pour l'évacuation dans l'eau des gaz d'échappement de moteurs thermiques ou de reformeurs installés de manière répartie dans un navire (31), ces moteurs thermiques ou ces reformeurs étant disposés de préférence sous la ligne de flottaison.

10. Dispositif selon l'une ou plusieurs des revendications précédentes, **caractérisé en ce qu'**il est utilisé pour l'évacuation dans l'eau des gaz d'échappement de turbines à gaz destinées à l'entraînement de waterjets disposés profondément sous la ligne de flottaison.

11. Dispositif selon revendication 10, **caractérisé en ce que** le conduit d'évacuation du mélange eau gaz d'échappement (10, 20) débouche dans la zone d'éjection de la veine d'eau des waterjets disposés profondément sous la ligne de flottaison.

12. Dispositif selon l'une ou plusieurs des revendications précédentes, **caractérisé en ce que** le conduit d'évacuation du mélange eau gaz d'échappement (10, 20) débouche dans un redan du flotteur du navire.

13. Dispositif selon revendication 10, 11 ou 12, **caractérisé en ce que** la sortie du waterjet a un dispositif de réglage de la section de sortie (22), de préférence de type télescopique.

14. Dispositif selon l'une ou plusieurs des revendications 10 à 13, **caractérisé en ce qu'**il est disposé sensiblement parallèlement au waterjets (37) eux-mêmes disposés profondément sous la flottaison.

15. Dispositif selon l'une des revendications 10 à 14, **caractérisé en ce qu'**il a plusieurs branches de mélange en dépression.

16. Dispositif selon l'une ou plusieurs des revendications précédentes, **caractérisé en ce qu'**il est utilisé sur des navires de combat pour la suppression de la signature IR.

17. Dispositif selon l'une ou plusieurs des revendications 1 à 15, **caractérisé en ce qu'**il est utilisé sur des yachts pour l'évacuation dans l'eau des gaz d'échappement.

18. Dispositif selon l'une ou plusieurs des revendications 1 à 15, **caractérisé en ce qu'**il est utilisé sur des transbordeurs rapides, notamment pour le transport de véhicules automobiles, pour l'évacuation dans l'eau des gaz d'échappement.

19. Navire de haute mer ayant, notamment, des moteurs thermiques répartis à bord, **caractérisé en ce qu'**il a au moins un dispositif (41, 42, 43) selon l'une ou plusieurs des revendications précédentes permettant l'évacuation des gaz d'échappement sous la ligne de flottaison, et notamment à une profondeur de plusieurs mètres sous la ligne de flottaison.

20. Navire de haute mer selon revendication 19, **caractérisé en ce qu'**il a au moins une prise d'eau de mer, par exemple sous forme de caisson, pour le prélèvement d'eau de propulsion dans l'eau entourant le navire.

21. Navire de haute mer selon revendication 19 ou 20, **caractérisé en ce qu'**il a un dispositif d'envoi d'eau de refroidissement à l'eau de propulsion.

22. Navire de haute mer selon l'une des revendications 19, 20 ou 21, **caractérisé en ce qu'**il a une pompe réglable d'eau de propulsion entraînée par un moteur électrique intégré à la commande automatisée du navire.

23. Navire de haute mer selon l'une des revendications 19 à 22, **caractérisé en ce qu'**il présente des valves de non-retour ou des clapets de non-retour dans la conduite des gaz, qui ont des indicateurs de position et qui sont reliés de préférence à la commande automatisée du navire.
